Europäisches Patentamt

European Patent Office

Office européen des brevets

(11) Veröffentlichungsnummer: **0 258 211**
**B1**

(12) **EUROPÄISCHE PATENTSCHRIFT**

(45) Veröffentlichungstag der Patentschrifft:
07.02.90

(21) Anmeldenummer: **85901976.2**

(22) Anmeldetag: **19.04.85**

(86) Internationale Anmeldenummer:
**PCT/DE 85/00127**

(87) Internationale Veröffentlichungsnummer:
**WO 86/06337 (06.11.86 Gazette 86/24)**

(51) Int. Cl. ⁵: **B 62 D 47/00**

(54) **KRAFTFAHRZEUG.**

(43) Veröffentlichungstag der Anmeldung:
09.03.88 Patentblatt 88/10

(45) Bekanntmachung des Hinweises auf die Patenterteilung:
07.02.90 Patentblatt 90/06

(84) Bennante Vertragsstaaten:
AT BE CH DE FR GB IT LI LU NL SE

(56) Entgegenhaltungen:
CH-A-295 873
DE-A-2 617 277
FR-A-2 068 826

(73) Patentinhaber: APER, Ludwig
Julianenstrasse 10
D-6524 Guntersblum (DE)

(72) Erfinder: APER, Ludwig
Julianenstrasse 10
D-6524 Guntersblum (DE)

(74) Vertreter: Kodron, Rudolf S., Dipl.-Ing.
Adam-Karrillon-Strasse 30
D-6500 Mainz (DE)

## Beschreibung

Die Erfindung betrifft ein Kraftfahrzeug mit einem das Triebwerk enthaltenden Vorderteil, einem abtrennbaren Mittelteil und einer abtrennbaren Heckwand, die alternativ am Vorder- oder Mittelteil anbaubar ist.

Bei einem aus der DE-A-2 617 277 bekanntgewordenen vergleichbaren Kraftfahrzeugtyp besteht der Nachteil, daß das dreiteilige aus einem Vorderteil, einem Mittelteil und aus einer Heckwand bestehende Kraftfahrzeug die übliche Länge der vorhandenen und bekannten einteiligen Kraftfahrzeuge überschreitet, so daß die Unterbringung eines solchen verlängerten Kraftfahrzeugs in den vorhandenen Garagen nicht möglich ist.

Der Erfindung liegt die Aufgabe zugrunde, diesen Nachteil zu vermeiden und ein dreiteiliges Kraftfahrzeug vorzuschlagen, das mit dem Platzangebot der bestehenden Parkplätze und vorhandenen Garagen auskommt.

Gelöst wird diese Aufgabe nach der Erfindung dadurch, daß das Vorderteil insoweit verbreitert ausgebildet ist, daß drei nebeneinander angeordnete Sitzplätze eingerichtet sind, an den aneinanderliegenden Unterkanten der drei Kraftfahrzeugteile eine auf die Fahrzeugbreite verteilte Dreipunktverschraubung und an den aneinanderliegenden Oberkanten eine Zweipunktverschraubung mit jeweils einem Schraubenpaar vorgesehen ist und zwischen den oberen und unteren Verschraubungsmitteln zwei in Längsrichtung verlaufende Verbindungsstangen (Stabilisatoren) angeordnet sind, die an ihren beiden Enden mittels leicht lösbarer Verbindungsmittel an den oberen Enden der StoßdämpferFederbeine des hinteren Räderpaares des Vorderteils und der Stoßdämpfer-Federbeine des Räderpaares des Mittelteils angreifen.

Die Heckwand kann in eine Heckschürze und eine schwenkbare Hecktür unterteilt sein.

Nachfolgend wird anhand der Zeichnung eine Ausführungsform der Erfindung näher erläutert.

Es zeigen:

Figur 1: eine Seitenansicht eines dreiteiligen Personenkraftwagens mit den drei auseinandergezogen dargestellten Bestandteilen,

Figur 2: einen Querschnitt entlang Schnittlinie II - II in Figur 1,

Figur 3: eine Ausschnittsvergrößerung aus Figur 1 und

Figur 4: eine weitere Ausschnittsvergrößerung aus Figur 1.

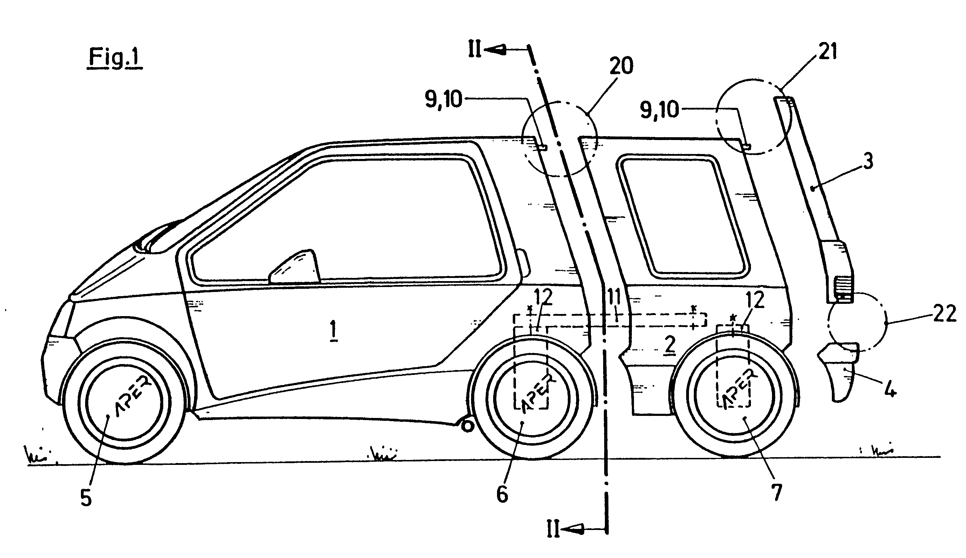

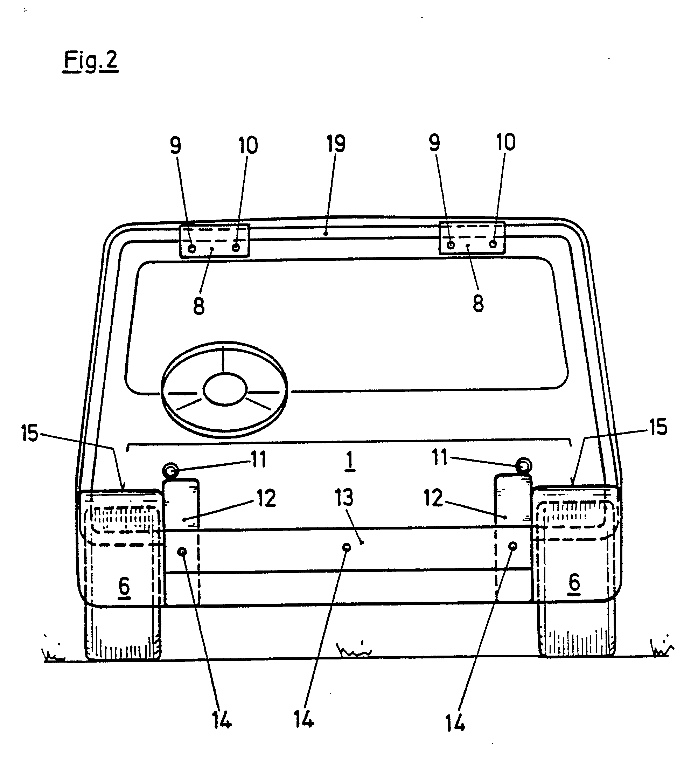

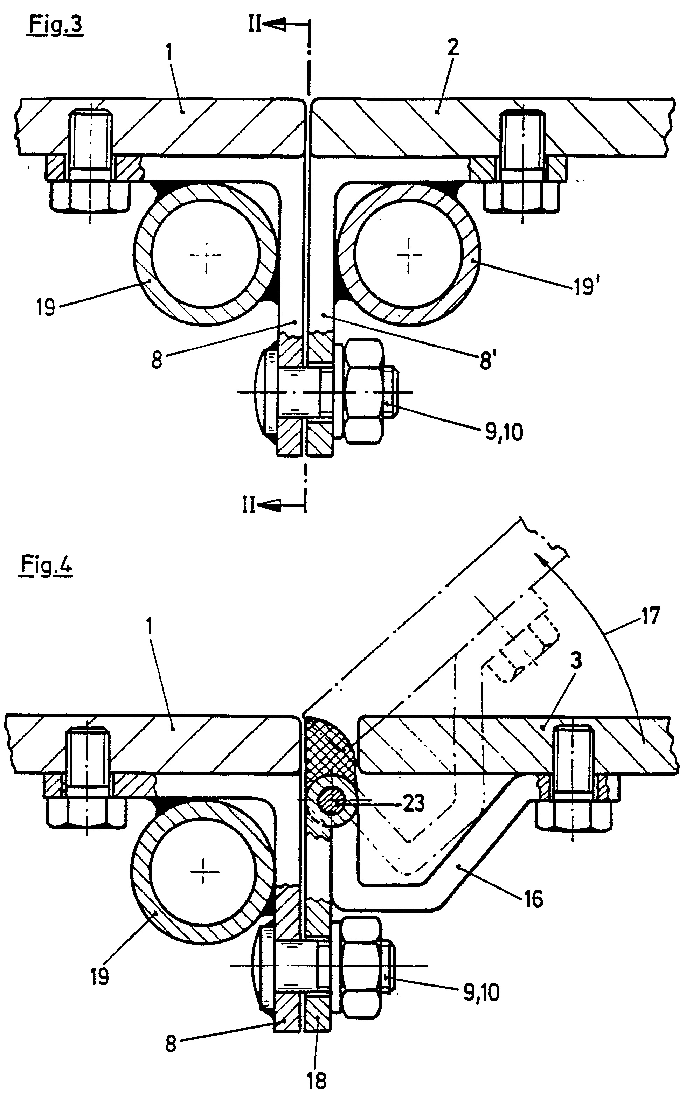

Der in Figur 1 gegebenen schematischen Darstellung ist entnehmbar, daß der Personenkraftwagen aus einem das Triebwerk enthaltenden Vorderteil 1, einem abtrennbaren, den Fahrgastraum vergrößernden Mittelteil 2 und einer abtrennbaren Heckwand 3, 4 besteht, die alternativ am Mittelteil 2 oder Vorderteil 1 anbaubar ist.

Das Vorderteil verfügt über die beiden Räderpaare 5, 5 und 6, 6, wogegen das Mittelteil 2 ein Laufradpaar 7, 7 besitzt.

Die Heckwand ist vorteilhaft zweiteilig ausgebildet und besteht aus einer hochklappbaren Hecktür 3 und einer Heckschürze 4.

Die Darstellung gemäß Figur 2 zeigt die Art und Anordnung der lösbaren Verbindungsmittel, mithilfe welcher das Mittelteil 2 mit dem Vorderteil 1 verbunden und wieder getrennt werden kann. An der unteren Kante ist am Vorderteil 1 eine Quertraverse 13 mit drei Bohrungen 14, 14, 14 vorgesehen, in welche in der Zeichnung nicht dargestellte Verbindungsschrauben einsteckbar sind. Die vordere Unterkante des Mittelteils 2 ist entsprechend ausgebildet, so daß zwei Quertraversen 13, 13 mittels dreier Schrauben miteinander verbindbar sind.

An der Oberkante sind zwei Anlageplatten 8,8 mit jeweils zwei Steckschrauben 9, 10 befestigt, die in entsprechende Bohrungen in entsprechend gestalteten Anlageplatten 8, 8 an der vorderen Oberkante des Mittelteils 2 einführbar sind.

Eine zusätzliche gegenseitige Verbindung der genannten beiden Teile wird noch durch in Längsrichtung verlaufende Verbindungsstangen (Stabilisatoren) 11, 11 erzielt, die an ihren beiden Enden mittels leicht lösbarer Verbindungsmittel an den oberen Enden der Stoßdämpfer-Federbeine 12, 12 des Räderpaares 6, 6 und des Laufradpaares 7, 7 des Mittelteils 2 angreifen. Die Stoßdämpfer-Federbeine 12, 12 sind mit den Radläufen 15, 15 fest verbunden.

Die Figur 3 zeigt in vergrößerter Darstellung eine beispielsweise Ausführungsform der durch den Kreis 20 in Figur 1 umfaßten Verbindungsmittel.

Die Anlageplatten 8 sind fest mit einem querverlaufenden Rohrrahmen 19 und mit dem Dach des Vorderteils 1 verbunden. Die mit den Anlageplatten 8 fest verbundenen Schraubbolzen 9, 10 durchgreifen entsprechende Bohrungen in den gegenüberliegenden entsprechend gestalteten Anlageplatten 8', 8', des Mittelteils 2, die wiederum an Querrohren 19' befestigt sind.

Die Figur 4 zeigt ein Beispiel einer anders ausgebildeten Verbindungsform aus dem Bereich des Ausschnitts des Kreises 21 in Figur 1 . Diese Verbindungsform gewährleistet infolge des zusätzlichen Scharniergelenks 23 ein Ausschwenken der Hecktür 3 in Richtung des Pfeils 17 nach oben, da ein Teil 16 gegenüber dem Teil 18 der Anlageplatte der Heckwand beweglich ausgestaltet ist.

In dem durch den Ausschnittskreis 22 in Figur 1 angedeuteten Bereich sind in der Zeichnung nicht näher dargestellte herkömmliche lösbare Verbindungsmittel vorgesehen, die nach Art der bekannten Kofferraumdeckelverschlüsse gestaltet sind.

## Patentansprüche

1. Kraftfahrzeug mit einem das Triebwerk enthaltenden Vorderteil, einem abtrennbaren Mittelteil und einer abtrennbaren Heckwand, die alternativ am Vorder- oder Mittelteil anbaubar ist, *dadurch gekennzeichnet,* daß

- das Vorderteil (1) insoweit verbreitert ausgebildet ist, daß drei nebeneinander angeordnete Sitzplätze eingerichtet sind,
- an den aneinanderliegenden Unterkanten der drei Kraftfahrzeugteile (1; 2; 3, 4) eine auf die Fahrzeugbreite verteilte Dreipunktverschraubung (14, 14, 14) und an den aneinanderliegenden Oberkanten eine Zweipunktverschraubung mit jeweils einem Schraubenpaar (9, 10; 9, 10) vorgesehen ist und
- zwischen den oberen und unteren Verschraubungsmitteln (9, 10; 14) zwei in Längsrichtung verlaufende Verbindungsstangen (Stabilisatoren) (11, 11) angeordnet sind,
- die an ihren beiden Enden mittels leicht lösbarer Verbindungsmittel an den oberen Enden der Stoßdämpfer-Federbeine (12, 12) des hinteren Räderpaares (6, 6) des Vorderteils (1) und der Stoßdämpfer-Federbeine (12, 12) des Räderpaares (7, 7) des Mittelteils (2) angreifen.

2. Kraftfahrzeug nach Anspruch 1, *dadurch gekennzeichnet,* daß die Heckwand in eine Heckschürze (4) und eine schwenkbare Hecktür (3) unterteilt ist.

## Claims

1. A powered vehicle with a front part containing the propulsion mechanism, a disconnectable centre part and a disconnectable rear wall, which can be mounted alternatively on the front part or the centre part, *characterized in that*

- the front part (1) is broadened such that there are three seats arranged beside one another,
- a three-point screw connection (14, 14, I4) distributed over the width of the vehicle is provided on the joining lower edges of the three parts of the vehicle (1; 2; 3, 4) and a twopoint screw connection is provided on the adjacent upper edges, each containing a pair of screws, (9, 10; 9, 10), and
- that two longitudinally extending connecting rods (stabilizers) (11, 11) are arranged between the upper and lower screw connection means (9, 10; 14),
- which, by means of easily detachable connecting means, on their two ends engage on the upper ends of the shock absorbing legs (12, 12) of the back pair of wheels (6) of the front part (1) and of the shock absorbing legs (12, 12) of the pair of wheels (7, 7) of the centre part (2).

2. A powered vehicle as claimed in claim 1, *characterized in* that the rear wall is divided into a rear apron (4) and a hinged lift-up tailgate (3).

## Revendications

1. Véhicule automobile équipé d'une partie antérieure contenant le propulseur, avec partie intermédiaire sectionnable et une paroi postérieure sectionnable, montable alternativement sur la partie antérieure ou intermédiaire, *caractérisé* par le fait

- que la partie- antérieure (1) est formée de manière élargie, de sorte que trois places assises sont prévues l'une à côté de l'autre;
- que pour les bords inférieurs contigus des trois parties du véhicule (1; 2; 3, 4) est prévu un vissage à trois points (14, 14, 14) distribué sur la largeur du véhicule et que pour les bords supérieurs contigus est prévu un vissage à deux points avec respectivement une paire de vis (9, 10; 9, 10) et
- qu'entre les deux moyens de vissage supérieur et inférieur (9; 10; 14) sont disposées deux barres de connexion (stabilisateurs) (11, 11) en direction longitudinale,
- qui du côté des deux bouts sont attachées, à travers des moyens de vissage facilement détâchables, aux bouts supérieurs des montants de force à ressort amortisseurs (12, 12) du couple de roues postérieur (6, 6) de la partie antérieure (1) et des montants de force à ressort amortisseurs (I2, 12) du couple de roues (7, 7) de la partie intermédiaire.

2. Véhicule automobile selon la revendication 1, *caractérisé* par le fait que la paroi postérieure est divisée en un panneau postérieur (4) et en un hayon pivotant (3).

Fig.1

EP 0 258 211 B1

Fig.2

Fig.3

1

2

II

19

19'

8

8'

9,10

II

Fig.4

1

17

3

23

16

19

9,10

8

18

5